(19) **Europäisches Patentamt**

**European Patent Office**

**Office européen des brevets**

(11) **EP 0 631 991 B1**

(12) **EUROPÄISCHE PATENTSCHRIFT**

(45) Veröffentlichungstag und Bekanntmachung des Hinweises auf die Patenterteilung:
**05.02.1997 Patentblatt 1997/06**

(51) Int. Cl.$^6$: **C03B 7/06**

(21) Anmeldenummer: **94108596.1**

(22) Anmeldetag: **06.06.1994**

(54) **Verfahren und Vorrichtung zum Konditionieren und Homogenisieren eines Glasstroms**

Method and apparatus for conditioning and homogenising a glass stream

Procédé et appareil pour le conditionnement et l'homogénéisation d'un courant de verre

(84) Benannte Vertragsstaaten:
**AT BE CH DE DK ES FR GB IT LI NL PT**

(30) Priorität: **15.06.1993 DE 4319773**
**30.03.1994 DE 4411038**

(43) Veröffentlichungstag der Anmeldung:
**04.01.1995 Patentblatt 1995/01**

(73) Patentinhaber: **Beteiligungen Sorg GmbH & Co. KG**
**D-97816 Lohr (DE)**

(72) Erfinder:
- **Sorg, Helmut, Dipl.-Ing.**
  **D-63864 Glattbach (DE)**
- **Sims, Richard**
  **D-97816 Lohr am Main (DE)**

(74) Vertreter: **Zapfe, Hans, Dipl.-Ing.**
**Postfach 20 01 51**
**63136 Heusenstamm (DE)**

(56) Entgegenhaltungen:
| | |
|---|---|
| US-A- 1 845 824 | US-A- 1 986 575 |
| US-A- 3 133 803 | US-A- 3 248 203 |
| US-A- 3 645 712 | US-A- 4 854 960 |

## Beschreibung

Die Erfindung betrifft ein Verfahren zum Konditionieren und Homogenisieren eines kontinuierlich fließenden Glasstromes in einer Behandlungsstrecke, die sich von einer Eintrittsseite einer Arbeitswanne oder eines Verteilerkanals bis zu mindestens einer Entnahmestelle erstreckt und in der sich mindestens eine Kühlzone befindet, an die sich mindestens eine Homogenisierungszone für die Glastemperatur anschließt, wobei in der Arbeitswanne oder dem Verteilerkanal die Temperatur von einer Eintrittstemperatur $T_1$ auf eine Austrittstemperatur $T_2$ abgesenkt wird, vorzugsweise zum Herstellen von Formglasteilen wie Hohlglasteilen und Preßglasteilen.

Während die Prozeßtemperaturen beim Erschmelzen von Glas von dessen Zusammensetzung, vom Produktionsverfahren und von anderen Faktoren abhängen, liegen die zur Verarbeitung des Glases erforderlichen Temperaturen in der Regel niedriger als die Schmelztemperaturen bei der Herstellung des Glases. Demzufolge muß das Glas zwischen seiner Herstellung und Verarbeitung abgekühlt werden. Die Abkühlung des Glases ist ein Teil der sogenannten "Konditionierung", bei der das Glas für die Verarbeitung aufbereitet wird. Ebenfalls zur Konditionierung des Glases gehört das Erreichen eines für den in Frage kommenden Verarbeitungsprozeß erforderlichen Grades an thermischer Homogenität.

Die Konditionierung des Glases kann erst dann vorgenommen werden, wenn das Glas das eigentliche Schmelzaggregat bereits verlassen hat. Früher wurde die Konditionierung zumindest überwiegend in den sogenannten Vorherden oder Speisern durchgeführt. Seit einiger Zeit wird auch die sogenannte Arbeitswanne oder der Verteilerkanal für die Konditionierung herangezogen. Einige Entwicklungen der allerletzten Zeit haben die Situation in bezug auf das Abkühlen des Glases entscheidend verändert.

Im Bereich der Schmelzwannen wurde durch verschiedene Maßnahmen die spezifische Schmelzleistung, d.h. die auf die Fläche des Schmelzbereichs bezogene Leistung, wesentlich erhöht. Entsprechend gestiegen ist damit auch die Temperatur des aus der Schmelzwanne abgezogenen Glases. Auch andere Hilfsmittel, durch die die Glastemperatur am Boden der Schmelzwanne erhöht wird, wie z. B. Bubbler oder Bodenheizungen führen meist zu einer Steigerung der Austrittstemperatur des Glases aus der Schmelzwanne.

Auch die Glas-Verarbeitungsmaschinen wurden ständig weiterentwickelt, um u. a. den Durchsatz zu steigern. Während noch in den Sechziger und Siebziger Jahren Maschinen zur Massenherstellung von Hohlgläsern mit 6, 8 oder 10 Stationen für jeweils zwei Tropfen versehen waren, haben größere Maschinen heutzutage 12 bis 16 Stationen für jeweils zwei Tropfen oder zehn Stationen für jeweils drei oder vier Tropfen. Dadurch hat sich die Durchsatzleistung einer einzelnen Maschine ganz erheblich erhöht. Die vorstehend beschriebenen Einflüsse haben dazu geführt, daß die gesamte Wärmemenge, die dem Glas nach dem Verlassen der Schmelzwanne und vor der Verarbeitung entnommen werden muß, erheblich gestiegen ist. Die Steigerung des Durchsatzes der einzelnen Maschinen hat die Verweilzeit des Glases in den der Schmelzwanne nachgeschalteten Teilen der Anlage verringert. Dies führt zu dem konträren Sachverhalt, daß eine größere Wärmemenge innerhalb einer geringeren Zeit abgeführt werden muß. Daraus ergibt sich, daß die Produktivität der gesamten Linie ganz erheblich von der Kühlleistung innerhalb der Behandlungsstrecke abhängt. Hierbei müssen allerdings erneut zahlreiche technische Probleme beachtet werden.

Das Fließen des Glases in Arbeitswannen und Vorherden, die im allgemeinen die Grundform eines Kanals aufweisen, erfolgt aufgrund der relativ hohen Viskosität des Glases in Form einer laminaren Strömung. Typischerweise bildet sich dabei im Glasbad ein Geschwindigkeitsprofil aus, bei dem das Maximum etwa in der Mitte des Strömungskanals bzw. an der Glasoberfläche liegt. Aufgrund der Abhängigkeit der Viskosität von der Temperatur der Glasschmelze existiert eine Wechselwirkung zwischen der Glastemperatur, den Wärmeverlusten und der Fließgeschwindigkeit des Glases. Bei örtlich herabgesetzter Geschwindigkeit werden die Wärmeverluste durch Erhöhung der Verweilzeit vergrößert. Dadurch sinkt die Temperatur weiter ab, und durch die dadurch bedingte Erhöhung der Viskosität verringert sich die örtliche Fließgeschwindigkeit noch weiter.

Die Verringerung der Strömungsgeschwindigkeit in einem Bereich führt bei gleichbleibender Durchsatzmenge zwangsläufig zur Erhöhung der Strömungsgeschwindigkeiten in anderen Bereichen mit höheren Glastemperaturen. Damit wiederum wird die Verweilzeit in den Bereichen mit höherer Temperatur und dadurch die effektive Kühlleistung reduziert. Aus diesem Grunde muß die Wirkung eines Kühlsystems möglichst genau definierbar sein, und innerhalb der Kühlzone sollen möglichst Bereiche vermieden werden, in denen geringe Strömungsgeschwindigkeiten auftreten. Durch Bereiche mit niedrigen Temperaturen und höheren Viskositäten tritt wirkungsmäßig eine Verengung des Strömungsquerschnitts ein, was wiederum zu einem erhöhten Gefälle des Glasstandes zwischen der Schmelzwanne und der Entnahmestelle führt. Dies kann wiederum Produktionsstörungen zur Folge haben.

Außerdem muß hierbei berücksichtigt werden, daß die Abkühlung von Gläsern bestimmter Zusammensetzung unterhalb bestimmter Grenztemperaturen, die von der Glaszusammensetzung abhängig sind, zur Bildung von Kristallen führen kann, ein Vorgang, der als "Entglasung" bezeichnet wird. Auch dieser Vorgang kann die Produktion empfindlich stören. Infolgedessen ist beim Einsatz einer Kühlstrecke die Abkühlung des Glasbades auf Temperaturen unterhalb der Entglasungstemperatur möglichst zu vermeiden. Da wiederum die Kristallbildung sowohl von der Temperatur als auch von der Zeit abhängig ist, spielt die Verweilzeit des Glases in dem kritischen Temperaturbereich zusätzlich eine wesentliche Rolle.

Der Wärmetransport im Glasbad selbst findet fast ausschließlich durch Strahlung statt, wobei die Transportgeschwindigkeit von der Zusammensetzung des Glases abhängig ist. Beispielsweise bewirkt die Anwesenheit von zweiwertigem Eisen oder Chrom, die zur Färbung von grünem Glas eingesetzt werden, eine Herabsetzung des Wärmetransports im Glasbad im Vergleich beispielsweise zu einem Kalk-Natron-Weißglas. Analoge Verhältnisse gelten auch für Braunglas. Dies hat zur Folge, daß der Wärmetransport aus den unteren Bereichen des Glasbades verzögert wird. Eine Kühlung der unteren Bereiche des Glasbades ist aber unerläßlich. Erfolgt die Kühlung zu einem zu späten Zeitpunkt, so wird kein effektiver Kühleffekt mehr in den unteren Bereichen des Glasbades beobachtet.

Es sind zahlreiche Kühlsysteme bekannt geworden, bei denen der Wärmetransport durch Strahlung überwiegt. Diese Art des Wärmeentzugs ist deswegen vorteilhaft, weil dadurch die Wärme nicht unmittelbar von der Glasoberfläche entnommen wird, sondern von einer Schicht, deren Stärke von der Strahlungsdurchlässigkeit des Glases abhängt. Das Stefan-Boltzmann-Gesetz bietet eine Berechnungsgrundlage für die durch Strahlung transportierten Wärmemengen. Ein wesentlicher Faktor ist dabei der Temperaturunterschied zwischen Strahler und Empfänger. In der für die Glasindustrie typischen Anwendung ist die Temperatur des Glases als Strahler vorgegeben. Aus diesem Grunde ist die Temperatur des Empfängers für die abgezogene Wärmemenge ausschlaggebend.

Ein effektives Kühlsystem ist in der EP-PS 0 212 539 beschrieben. Hierbei sind in der Decke einer Behandlungsstrecke Öffnungen vorgesehen, deren wirksamer Querschnitt durch verschiebbare Platten veränderbar ist. Dadurch wird die Umgebung nach Maßgabe des Öffnungsquerschnitts als Strahlungsempfänger benutzt. Da die Temperatur der Umgebung auch im ungünstigsten Fall unter 100 °C liegt und damit wesentlich niedriger liegt als die erreichbaren Empfängertemperaturen bei anderen Systemen, ist die Leistungsfähigkeit pro Flächeneinheit wesentlich höher. Andererseits erzeugen aber die Abstrahlungsöffnungen eine Kaminwirkung und verursachen damit wiederum konvektive Luftbewegungen. Solche Bewegungen sind schwer kontrollierbar und können zu regelungstechnischen Problemen führen.

Auch wenn die vorhandene Kühlkapazität ausreichend ist, kann es immer noch zu Problemen bei der Kühlung der unteren Schichten der Glasströmung kommen, die vor allem bei Farbgläsern eine zu hohe Temperatur behalten.

Durch die US-A-4 854 960 ist es bekannt, oberhalb der durchbrochenen Decke eines Vorherdes zur Aufnahme der Wärmestrahlung der Glasschmelze Kühlkanäle vorzusehen, die aus einer bestimmten Eisen-Chrom-Aluminium-Legierung bestehen. Ausführungen über die Tiefe des Schmelzbades werden nicht gemacht. Die bekannte Vorrichtung ist für einen verhältnismäßig geringen Glasdurchsatz von 10 bis 60 Tonnen pro Tag vorgesehen. Anregungen für den Bau und Betrieb von Arbeitswannen und Verteilerkanälen sind dieser Schrift nicht zu entnehmen.

Durch die US-A-3 133 803 ist es bekannt, am Ende eines Vorherdes unmittelbar vor dem Speiserkopf mit der Entnahmestelle Deckenbeheizungen und Bodenkühlungen vorzusehen, die gemeinsam oder alternativ betrieben werden können. Bei dieser Vorrichtung fehlt jedoch eine nachgeschaltete Homogenisierungszone, so daß sich bei hohem Glasdurchsatz erhebliche Temperaturdifferenzen zwischen der Schmelzenoberfläche und der Bodenströmung einstellen können. Anregungen für den Bau und die Betriebsweise von Arbeitswannen oder Verteilerkanälen sind auch dieser Druckschrift nicht zu entnehmen.

Durch die US-A-3 248 203 ist es bekannt, über nahezu die gesamte Länge eines Vorherdes in dessen Boden Kühlkörper vorzusehen, die aus dem Boden hervorstehen, parallel zur Strömungsrichtung des Glases verlaufen und die Glasströmung gewissermaßen in zwei Teilströmungen unterteilen. Hiermit ist es zwar möglich, dem Zentrum des Glasstromes eine große Wärmemenge zu entziehen, in Folge des Fehlens einer nachgeschalteten Homogenisierungszone ist es jedoch nicht mehr möglich, große Temperaturgradienten in der Glasschmelze in vertikaler und horizontaler Richtung auszugleichen. Soweit Badtiefen angegeben sind, handelt es sich nur um den Abstand zwischen dem Schmelzenspiegel und der Oberseite der Kühlkörper. Dieser Abstand wird mit beispielhaft 2,54 cm angegeben. Der bekannte Vorherd, der vorzugsweise für die Herstellung von Glasfasern vorgesehen ist, kann keine Anregungen für Bau und Betriebsweise von Arbeitswannen und Verteilerkanälen geben.

Durch die US-PS 2 394 893 ist es bekannt, den recht tiefen Inhalt einer Arbeitswanne mittels eines rechenähnlichen, gekühlten Rührers regelrecht abzurastern und dadurch den Inhalt der Arbeitswanne systematisch umzurühren. Diese Maßnahme ist jedoch konstruktiv sehr aufwendig und führt dennoch nicht zu einer Homogenisierung der Temperaturverteilung, da an den verschiedenen Ausgängen der Arbeitswanne kein hinreichender Strömungsweg für einen Temperaturausgleich mehr vorhanden ist.

Durch die DE-PS 25 07 015 ist es weiterhin bekannt, in der Schmelzwanne selbst, zwischen einem Schmelzabschnitt und einem Läuterungsabschnitt hoher Temperatur einerseits und einer Läuterungszone niedrigerer Temperatur andererseits wassergekühlte Rührvorrichtungen vorzusehen, um die Homogenisierung zu steigern und die Qualität des Glases zu verbessern. Dadurch wird aber eine größere Länge der Schmelzwanne erforderlich, und die Probleme hinsichtlich einer weiteren Kühlung und Homogenisierung der Temperatur in den sich an die Schmelzwanne anschließenden Aggregaten zur Weiterverarbeitung des Glases werden nicht gelöst.

Der Stand der Technik befaßt sich überwiegend mit der Kühlung der Glasströmung in Speisern oder Vorherden, die in der Regel einem Verteilerkanal nachgeschaltet sind.

Durch den Aufsatz von Sims "Increased Conditioning Time Leads to Improved Thermal Homogeneity", veröffentlicht in "GLASS INDUSTRY", November 1991, Seiten 8 bis 15, ist es bekannt, das von Vorherden her bekannte Prinzip der Abstrahlungskühlung durch im Querschnitt geregelte Abstrahlungsöffnungen in der Speiserdecke auch in den Decken von Arbeitswannen einzusetzen, um eine möglichst frühe Kühlung und eine lange Verweilzeit in der Homogenisierungszone erreichen zu können. Die Kühlwirkung ist in diesem Bereich jedoch begrenzt, da in Arbeitswannen und Verteilerkanälen üblicherweise zumindest in der Mitte eine große Badtiefe vorliegt, die auf die Lage des Deep-Refiners und des sich anschließenden Risers zurückzuführen ist. In vielen Fällen verläuft daher der Boden einer Arbeitswanne oder eines Verteilerkanals (zu den Vorherden) rampenförmig, so daß insbesondere im tiefen Teil der Arbeitswannen und Verteilerkanäle außerordentlich ungünstige Abkühlbedingungen für die Schmelze vorliegen. Die Ursache hierfür ist darin zu sehen, daß ein Energieabzug aus einer Glasschmelze zumindest überwiegend nur durch Strahlung erfolgen kann oder muß, und hierbei wird die Abstrahlung mit zunehmender Badtiefe immer ungünstiger, weil das darüber liegende Glas die Energie wieder absorbiert. Die Verhältnisse sind besonders ungünstig bei Braunglas und Grünglas, die die längerwellige Wärmestrahlung in erheblichem Umfange absorbieren. So weist Trier in seinem Buch "Glasschmelzöfen", Springer-Verlag, 1984, auf den Seiten 211/212 anhand eines Diagramms darauf hin, daß die Strahlungsleitfähigkeit von Braunglas und Grünglas bei einer Temperatur von 1300 °C nur etwa 1/4 bis 1/6 der Strahlungsleitfähigkeit von Weißglas (Wirtschaftsglas, Fensterglas) beträgt. Daraus resultieren erheblich verschlechterte Abkühlbedingungen mit zunehmender Badtiefe und zunehmender Glasfärbung. Dies aber führt in analoger Weise zur Ausbildung eines zunehmend steigenden Temperaturgradienten zwischen Badoberfläche und dem Bodenbereich des Bades, so daß sich bei erzwungenem Durchsatz unter einer langsam fließenden kühleren Oberflächenschicht eine schnell fließende heißere Bodenschicht ausbildet. Zum Ausgleich derartiger Vorgänge würden außerordentlich lange Homogenisierungszonen mit entsprechend großer Energiezufuhr benötigt, wobei schon der Platzbedarf nicht befriedigend gelöst werden kann. Wie bereits gesagt werden die Probleme mit zunehmender Färbung des Glases um ein Vielfaches, d.h. um den Faktor 4 bis 6, verschärft.

Nun könnte man zur Beseitigung des Problems daran denken, die gesamte Badtiefe in der Arbeitswanne oder im Verteilerkanal entsprechend zu verringern, um den negativen "Tiefeneffekt" zu kompensieren. Diese Maßnahme würde aber aufgrund der temperaturabhängigen Viskosität der Schmelze und des in hochviskosen Flüssigkeiten entstehenden Strömungsprofils zur Ausbildung eines Gefälles führen, dessen Höhendifferenz mit zunehmendem Durchsatz steigt, und genau dieser hohe Durchsatz wird bei modernen Glasschmelzanlagen in zunehmendem Maße gefordert. Die Ausbildung eines Gefälles in einer Arbeitswanne oder einem Verteilerkanal ist aber extrem unerwünscht, weil sich dann an den verschiedenen Entnahmestellen nicht mehr die gleichen Parameter einstellen lassen.

Der Erfindung liegt daher die Aufgabe zugrunde, ein Verfahren der eingangs beschriebenen Gattung anzugeben, durch das bei hohem Durchsatz der Behandlungsstrecke sowohl ein starker Kühleffekt als auch ein guter Homogenisierungseffekt erzeugt werden. Wie eingangs aufgezeigt wurde, stehen sich diese Forderungen gewissermaßen diametral entgegen.

Die Lösung der gestellten Aufgabe erfolgt bei dem eingangs angegebenen Verfahren erfindungsgemäß dadurch, daß in der mindestens einen Kühlzone der Arbeitswanne oder des Verteilerkanals mittels mindestens einer vom Boden aufragenden Erhebung ein Strömungsquerschnitt der Glasmasse mit einem Tiefen-/Breitenverhältnis T/B von maximal 0,6 eingestellt wird, wobei die maximale Tiefe $T_{max}$ 300 mm beträgt, und daß in dem Glasstrom in der Summe aller Kühlzonen der Arbeitswanne oder des Verteilerkanals mindestens 50 % der Temperaturdifferenz zwischen $T_1$ und $T_2$ abgebaut werden.

Vereinfacht ausgedrückt besteht die Erfindung darin, in der Arbeitswanne oder im Verteilerkanal im Bereich der Kühlzone(n) durch mindestens eine schwellenartige Bodenerhebung einen möglichst niedrigen Füllstand der Glasschmelze zu erzeugen, in diesem Bereich des niedrigen Füllstandes möglichst viel Wärme zu entziehen, so daß bei gegebener Länge der gesamten Behandlungsstrecke eine möglichst lange Homogenisierungszone zur Verfügung steht, in der ein Ausgleich der restlichen Temperaturdifferenzen herbeigeführt werden kann.

Daraus ergibt sich, daß die Verhältnisse um so besser werden, je stärker das Tiefen-/Breitenverhältnis T/B verringert wird, beispielsweise auf 0,5, 0,4, 0,3, 0,2 und darunter. Es versteht sich, daß selbstverständlich sämtliche Zwischenwerte gleichermaßen zu Vorteilen führen.

Auch hierbei wachsen die Vorteile zunächst mit abnehmender Tiefe, dann z. B., wenn die maximale Tiefe $T_{max}$ bei Anordnung der Kühlzone in einer Arbeitswanne oder in einem Verteilerkanal auch kleiner als 300 mm gewählt werden kann, beispielsweise zu 250 mm, 200 mm oder darunter.

Die angegebenen geringen Badtiefen sind bei den heute geforderten hohen Durchsätzen keineswegs selbstverständlich. Ihnen steht nämlich der Effekt entgegen, daß sich über die Länge der Kühlzone und des übrigen Strömungsweges ein von der Strömungsgeschwindigkeit abhängiges Gefälle einstellt, und die Strömungsgeschwindigkeit und damit das Gefälle nehmen mit geringerer Badtiefe stark zu.

Es versteht sich, daß in allen Fällen Mindesttiefen nicht unterschritten werden können. Diese lassen sich jedoch experimentell bestimmen.

Der erfindungsgemäße Gedanke zielt mithin in Richtung einer "örtlich begrenzten Dünnschichtkühlung", so daß es möglich ist, mit den an sich bekannten Kühlsystemen auf relativ kurzem Wege, d.h. örtlich begrenzt auf den Bereich der Bodenerhebungen außerordentlich große Wärmemengen abzuziehen, die in Relation zu der Temperaturdifferenz zwischen $T_1$ und $T_2$ zu setzen sind.

Die Temperatur $T_1$ ist diejenige am Ausgang der Schmelzwanne bzw. am Eintritt in die Arbeitswanne oder den Verteilerkanal und die Temperatur $T_2$ ist die Austrittstemperatur aus der Arbeitswanne oder dem Verteilerkanal. Die Temperatur $T_1$ ist eine Folge der notwendigen Betriebsbedingungen in der Schmelzwanne und liegt üblicherweise, aber beispielhaft, zwischen 1350 und 1400 °C. Die Temperatur $T_1$ liegt in der Regel um so höher, je höher der Durchsatz bzw. die Leistung der Schmelzwanne ist. Die Temperatur $T_2$ wird sowohl durch die Glasart als auch durch die Verarbeitungsbedingungen der üblicherweise erzeugten Glastropfen vorgegeben und liegt in der Regel beispielhaft zwischen 1120 und 1180 °C. Die erfindungsgemäße Ausbreitung des Strömungsquerschnitts über eine große Breite bei geringer Tiefe (bei gegebenen Durchsatz bzw. bei gegebener Strömungsgeschwindigkeit) im Bereich der oder einer jeden schwellenartigen Bodenerhebung ermöglicht eine außerordentlich starke Kühlung auf kürzestem Wege bei gleichzeitiger Verringerung von Unterschieden in der Strömungsgeschwindigkeit und in der Temperatur und damit in der Viskosität.

Es treten bereits dann erhebliche Vorteile ein, wenn in dem Glasstrom in der Summe aller Kühlzonen der Arbeitswanne oder des Verteilerkanals mindestens 50 % der Temperaturdifferenz zwischen $T_1$ und $T_2$ abgebaut werden.

Es ist jedoch besonders vorteilhaft, wenn in dem Glasstrom in der Summe aller Kühlzonen mindestens 60 % oder gar mindestens 70 % der Temperaturdifferenzen zwischen $T_1$ und $T_2$ abgebaut werden.

Wie bereits gesagt, können für den Wärmeentzug an sich bekannte Maßnahmen bzw. Mittel verwendet werden, wie beispielsweise eine Bodenkühlung durch in den Boden der Behandlungsstrecke eingebaute Kühlkanäle und/oder durch eine bewußt im Bodenbereich verminderte Isolierung. Weiterhin kann alternativ oder zusätzlich eine Oberflächenkühlung vorgesehen werden, wie durch regelbare Deckenöffnungen, und/oder durch Anblasen mit Gasen, beispielsweise mit Luft und/oder durch Kühlkörper, die ohne Berührung mit dem Glasstrom oberhalb des Glasspiegels angeordnet sind. Schließlich ist es möglich, eine Kühlung in der Masse selbst durchzuführen, beispielsweise durch Kühlkörper, die in das Glas eingetaucht sind und die zusätzlich noch die Wirkung von Rührelementen haben können.

Auch für die nachfolgende Homogenisierung der Temperatur in der Glasschmelze können an sich bekannte Mittel vorgesehen werden, wie eine entsprechend lange Homogenisierungszone mit der Voraussetzung einer möglichst vollkommenen Wärmeisolierung gegenüber der Umgebung, durch ungekühlte Rührelemente oder Leitflächen, desgleichen auch durch eine leichte Beheizung der Schmelze von oben durch Strahlung oder innerhalb des Glases durch den elektrischen Glaswiderstand und entsprechende Heizelektroden.

Durch die erfindungsgemäße örtlich begrenzte Dünnschichtkühlung wird erreicht, daß praktisch die gesamte Glasmenge vorübergehend im Einflußbereich des Kühlsystems liegt, so daß z. B. auch der Bodenbereich der Glasströmung einer Kühlung z. B. durch merkliche Abstrahlung nach oben hin ausgesetzt wird. Die ansonsten zu beobachtende, sich negativ auswirkende wechselseitige Verstärkung von Temperatur-, Viskositäts-, Verweilzeit- und Strömungsdifferenzen wird damit außerordentlich wirksam unterdrückt.

Von besonderer Bedeutung ist dabei die starke Kühlwirkung ganz am Anfang der Behandlungsstrecke, da dort die Temperatur zunächst noch sehr hoch und die Viskosität des Glases sehr niedrig ist.

Durch die erfindungsgemäße Dünnschichtkühlung auf kürzest-möglichem Wege läßt sich erreichen, daß der Strömungsweg der Glasmasse in der Kühlzone im wesentlichen geradlinig verläuft, so daß sogenannte "tote Ecken" und eine Zusatzbeheizung des Glases in diesen toten Ecken vermieden werden können. Außerdem wird dadurch der Aufbau der oder jeder Kühlzone ganz wesentlich vereinfacht und die Temperaturverteilung bereits in der Kühlzone zu einem großen Teil homogenisiert.

Die Erfindung betrifft auch eine Vorrichtung zur Durchführung des Verfahrens mit einer Behandlungsstrecke zum kontinuierlichen Führen eines Glasstromes, die sich von der Eintrittsseite einer Arbeitswanne oder eines Verteilerkanals bis zu mindestens einer Entnahmestelle erstreckt und in der sich mindestens eine Kühlzone befindet, an die sich mindestens eine Homogenisierungszone für die Glastemperatur anschließt.

Zur Lösung der gleichen Aufgabe ist eine solche Vorrichtung erfindungsgemäß dadurch gekennzeichnet, daß in der mindestens einen Kühlzone der Arbeitswanne oder des Verteilerkanals mittels mindestens einer vom Boden aufragenden Erhebung für den Glasstrom ein Strömungsquerschnitt mit einem Tiefen-/Breitenverhältnis T/B von maximal 0,6 vorhanden ist, wobei die maximale Tiefe $T_{max}$ 300 mm beträgt.

Bezüglich der Verringerung dieser Werte gelten die bereits weiter oben gemachten Ausführungen.

Ausführungsbeispiele des Erfindungsgegenstandes werden nachfolgend anhand der Figuren 1 bis 11 näher erläutert.

Es zeigen:

Figur 1      eine Draufsicht auf eine schematisch dargestellte Anordnung von Schmelzwanne, Verteilerkanal und drei Vorherden mit je einer Entnahmestelle,

Figur 2     einen vertikalen Längsschnitt durch eine Kühlzone mit einer Abstrahlungsöffnung in der Decke,

Figur 3     in der linken Hälfte eine Draufsicht von oben auf den Gegenstand nach Figur 2, und der rechten Hälfte einen Schnitt entlang der Linie III-III in Figur 2.

Figur 4     einen vertikalen Querschnitt durch den Gegenstand von Figur 3 entlang der Linie IV-IV,

Figur 5     einen vertikalen Längsschnitt durch eine Kühlzone analog Figur 2, jedoch mit einem geschlossenen Kühlkanal in der Decke,

Figur 6     einen vertikalen Längsschnitt durch den Verteilerkanal in Figur 1 in vergrößertem Maßstab,

Figur 7     einen vertikalen Längsschnitt analog der linken Hälfte von Figur 6 durch den Verteilerkanal einer gebauten Schmelzanlage in verkleinertem Maßstab gegenüber Figur 1,

Figur 8     einen vertikalen Längsschnitt durch eine Kühlzone, in deren Verlängerung sich ein eingetauchter Kühlkörper in Form einer Barriere befindet,

Figur 9     in der linken Hälfte eine Draufsicht auf den Gegenstand nach Figur 8, und in der rechten Hälfte einen Schnitt entlang der Linie IX-IX durch den Gegenstand von Figur 8,

Figur 10     einen vertikalen Querschnitt entlang der Linie X-X durch den Gegenstand von Figur 9, und

Figur 11     ein Diagramm von Temperaturverläufen an mehreren Meßstellen über die gesamte Länge des in Figur 7 gezeigten Abschnitts des Verteilerkanals mit Vergleichswerten.

Die im Schnitt dargestellten Teile bestehen, soweit nichts anderes angegeben ist, aus den üblichen keramischen bzw. mineralischen Ofenbau- und Isolierstoffen.

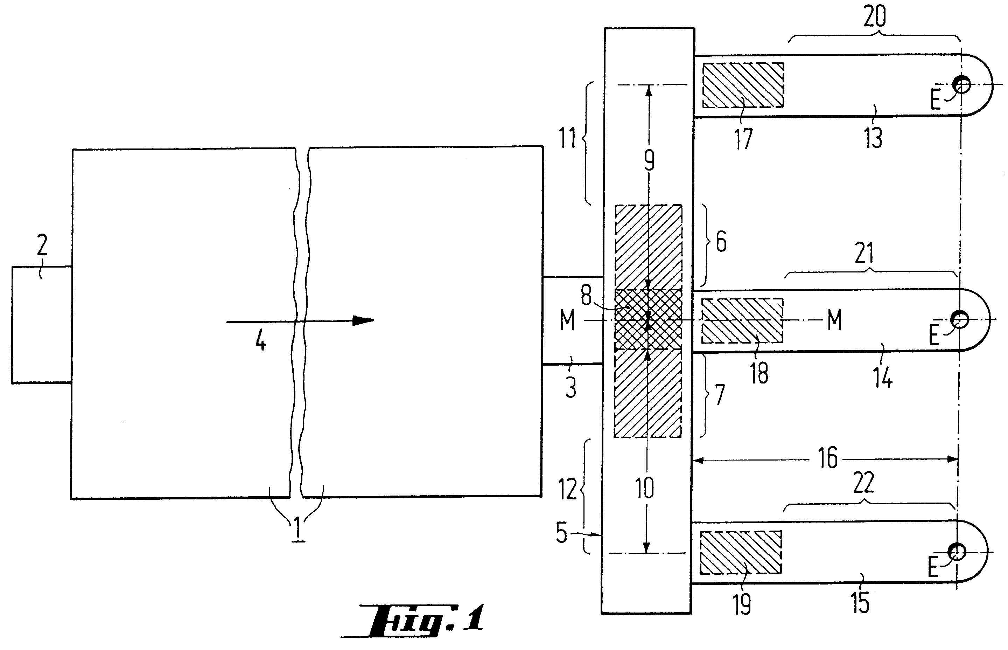

In Figur 1 ist eine Schmelzwanne 1 dargestellt, zu der eine Einlegeöffnung 2 gehört, die in herkömmlicher Weise als "Dog-House" ausgebildet ist, sowie ein Durchlaß 3, durch den die Glasschmelze aus der Schmelzwanne abgezogen wird. Die Glasbildner, die aus dem üblichen Gemenge und aus Scherben bestehen können, sowie das daraus gebildete Glas durchwandern die Schmelzwanne in Richtung des Pfeils 4. Es ist natürlich auch möglich, mehrere Einlegeöffnungen an den beiden Langseiten der Schmelzwanne anzuordnen, wodurch sich ein anderes Strömungsmuster ergibt. Zum Durchlaß 3 kann auch ein sogenannter "Riser" gehören. Derartige Einzelheiten sind Stand der Technik, so daß hierauf nicht näher eingegangen wird.

An den Durchlaß 3 schließt sich ein Verteilerkanal 5 an, der auch als Arbeitswanne ausgebildet sein kann. Bei einem ersten Ausführungsbeispiel befinden sich im Verteilerkanal beiderseits einer Mittenebene M-M zwei Kühlzonen 6 und 7, die einfach schraffiert und durch gestrichelte Linien umrandet sind. Es ist jedoch möglich, diese beiden Kühlzonen zu einer einzigen Kühlzone zu vereinigen, wodurch zusätzlich der kreuzschraffierte Bereich 8 hinzugewonnen wird.

Beiderseits der Mittellinie M-M werden zwei Behandlungsstrecken 9 und 10 gebildet, zu denen die beiden Kühlzonen 6 und 7 und ggf. auch der Bereich 8 gehören. Der restliche Strömungsweg der Glasschmelze bildet alsdann jeweils eine Homogenisierungszone 11 und 12. In den Homogenisierungszonen wird soweit wie irgend möglich eine Homogenisierung der Temperaturverteilung herbeigeführt.

Bei dem zweiten Ausführungsbeispiel sind an den Verteilerkanal 5 drei Vorherde bzw. Speiser 13, 14 und 15 angeschlossen, die jeweils in einer Entnahmestelle E enden. Die Gesamtlänge der Vorherde 13, 14 und 15 bildet bei diesem Ausführungsbeispiel jeweils eine Behandlungsstrecke 16. In jeder dieser Behandlungsstrecken 16 liegt jeweils eine Kühlzone 17, 18 und 19, die schraffiert dargestellt und von gestrichelten Linien umgeben ist. Es wird betont, daß die Darstellung außerordentlich schematisch gehalten ist, um das Verständnis zu erleichtern. Auch im Bereich der Behandlungsstrecken 16 schließt sich an die jeweilige Kühlzone eine Homogenisierungszone 20, 21 und 22 an.

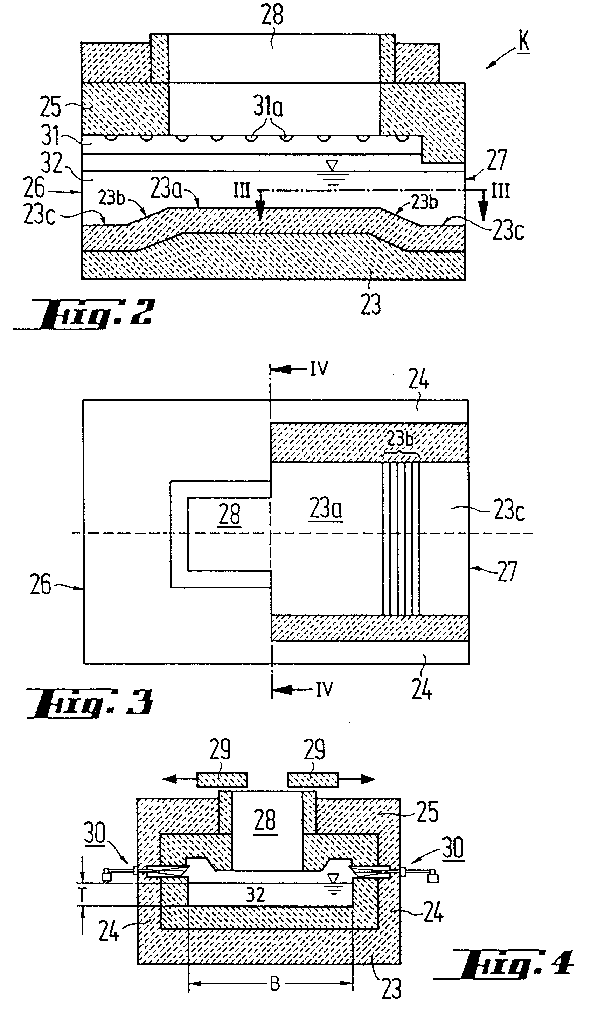

Die Figuren 2, 3 und 4 zeigen in verschiedenen Ansichten und Schnitten eine Kühlzone K, die an den Stellen der Kühlzonen 6 und 7 im Verteilerkanal 5 und ggf. zusätzlich an den Stellen der Kühlzonen 17, 18 und 19 in den Vorherden 13, 14 und 15 eingesetzt werden kann. Die betreffenden Kühlzonen stellen gewissermaßen einen Abschnitt eines Kanals mit einem Boden 23, Seitenwänden 24 und einer Decke 25 dar. Die Glasschmelze tritt auf der Eintrittsseite 26 ein und aus der Austrittsseite 27 wieder aus. Bei dem Ausführungsbeispiel nach den Figuren 2 und 3 befindet sich in der Decke 25 eine schachtförmige Öffnung 28 mit rechteckigem Querschnitt, die eine Abstrahlung der im Glas gespeicherten Energie zuläßt. Um den Energiestrom an die Umgebung zu regeln, sind über der Öffnung Verschlußelemente 29 angeordnet, durch die der freie Querschnitt der Öffnung 28 bestimmbar ist. Die Öffnungs- und Schließbewegung ist durch Pfeile angedeutet. In den beiden Seitenwänden 24 befinden sich zwei Reihen von Brennern 30 (Figur 4), deren Mündungen in sogenannten Düsensteinen 31 untergebracht sind. Für den Austritt der Brenngase besitzen die Düsensteine Öffnungen 31a, die in Figur 2 als Halbkreise erkennbar sind, weil in etwa die obere Hälfte durch Rippen verdeckt ist, die sich von der Decke 25 abwärts erstrecken, wie dies in etwa in Figur 4 dargestellt ist.

Die Figuren 2 und 3 zeigen, daß der Boden 23 auf einer Länge, die in etwa der Länge der Öffnung 28 entspricht, mit einer Erhebung 23a versehen ist, die sich über die gesamte Breite B des Kanalquerschnitts erstreckt. Die Erhebung 23a bildet gewissermaßen eine Schwelle, die an beiden Enden (in Strömungsrichtung gesehen) über Schrägflächen 23b in das untere Bodenniveau 23c übergeht. Es ist deutlich zu erkennen, daß der Glasstrom 32 im Bereich der Erhebung 23a auf den sehr flachen Strömungsquerschnitt reduziert wird, der die hohe Abkühlgeschwindigkeit ermöglicht. An die Austrittsseite 27 schließt sich alsdann die jeweilige Homogenisierungszone an.

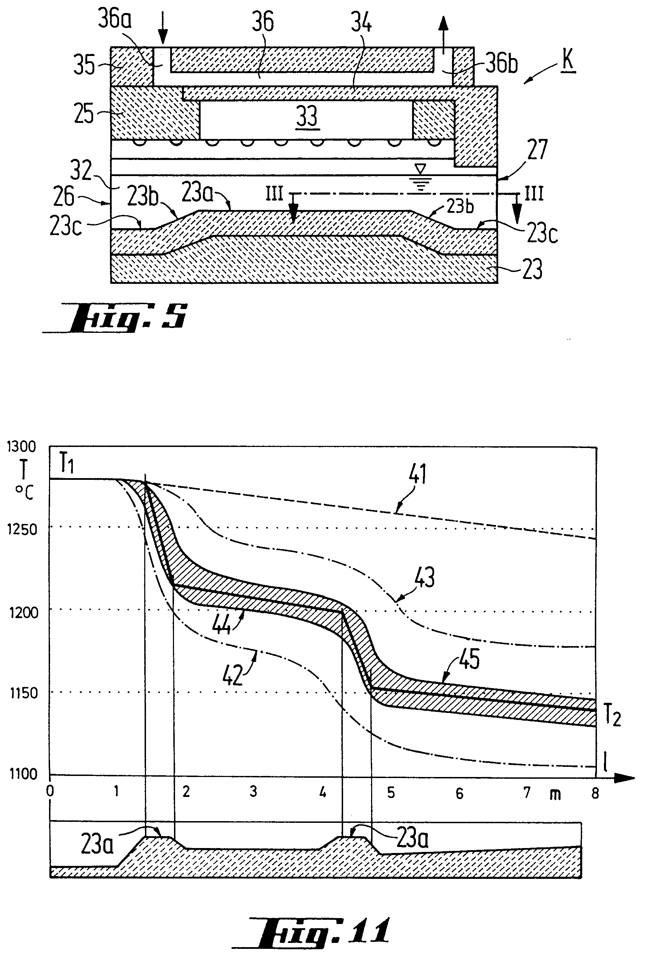

Die Figur 5 zeigt eine Variante der Kühlzone K, bei der eine Ausnehmung 33 in der Decke 25 durch eine Platte 34 verschlossen ist, die in diesem Falle den Strahlungsempfänger für die Wärmestrahlung des Glasstromes 32 darstellt. Oberhalb der Platte 34 befindet sich ein Aufbau 35 mit einem U-förmigen Strömungskanal 36 für die Durchleitung von Kühlluft. Eintrittsende 36a und Austrittsende 36b des Strömungskanals 36 sind nach oben gerichtet; die Strömungsrichtung ist durch Pfeile angedeutet. Durch eine entsprechende Menge an Kühlluft wird die Temperatur der Platte 34 beeinflußt und damit der auf den Glasstrom 32 einwirkende Kühleffekt.

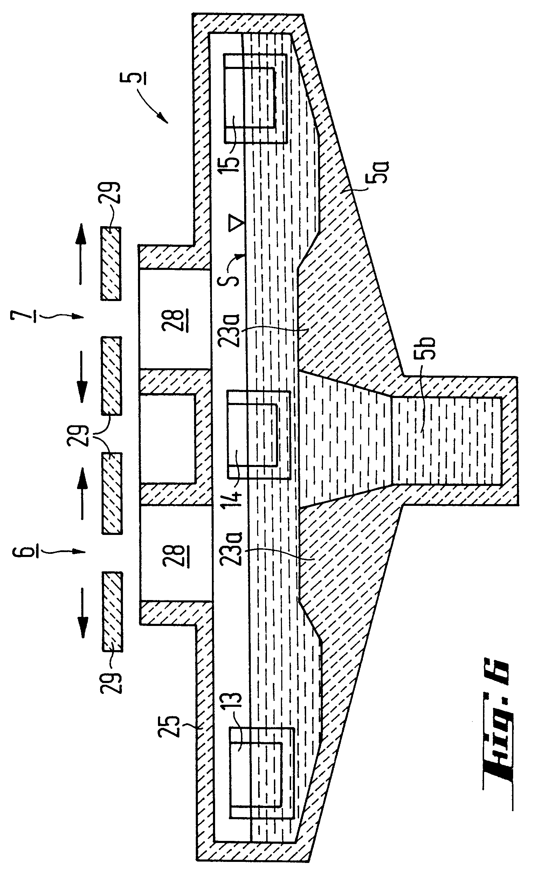

Der in Figur 6 im Schnitt dargestellte Verteilerkanal 5 besitzt - deutlicher gezeichnet als in Figur 1 - die beiden Kühlzonen 6 und 7, die im Prinzip der Kühlzone nach den Figuren 2 bis 4 entsprechen. In der Decke 25, die ein Teil des sogenannten Oberofens ist, befinden sich die beiden Öffnungen 28 für die Energieabfuhr durch Strahlung, wobei der Umfang der Energieabfuhr in der bereits beschriebenen Weise durch die verschiebbaren Verschlußelemente 29 regelbar ist. In den Boden 5a des Verteilerkanals 5 mündet der in Figur 1 dargestellte Durchlaß 3, so daß sich in dem besagten Boden ein Riser 5b befindet. In Richtung auf die beiden Enden des Verteilerkanals 5 hat der Boden 5a jeweils einen rampenförmigen Verlauf. Unterhalb der Öffnungen 28 ragen von dem Boden 5a die bereits beschriebenen schwellenförmigen Erhebungen 23a nach oben, die zwischen ihren ebenen und waagerechten Oberseiten und dem Schmelzenspiegel S den erfindungsgemäßen Strömungsquerschnitt mit geringer Badtiefe bilden. Jenseits der schwellenförmigen Erhebungen 23a hat der Verteilerkanal 5 wieder eine deutlich größere Tiefe, so daß die unerwünschte Ausbildung eines übermäßigen Strömungsgefälles unterbleibt. Die in Figur 1 gezeigten Vorherde 13, 14 und 15 sind nur durch ihre Stirnseiten angedeutet. Die Bewegungsrichtung der Verschlußelemente 29 ist gegenüber derjenigen nach Figur 4 um 90 ° verdreht, was aber auf die Funktion und Wirksamkeit keinen Einfluß hat.

Bei dem Ausführungsbeispiel eines Verteilerkanals 5' nach Figur 7 gehen von dem Boden 5a zwei schwellenförmige Erhebungen 23a aus, die gleichfalls von ebenen und waagerechten Oberflächen begrenzt sind, die unterhalb der Öffnungen 28 liegen. Vor, zwischen und hinter den Erhebungen 23a hat der Boden 5a wieder einen deutlich größeren Abstand vom Schmelzenspiegel S. Die Figur 7 ist maßstäblich zu werten. Der sogenannte "Riser" liegt mit Abstand rechts außerhalb des in Figur 7 gezeigten Abschnitts des Verteilerkanals 5'.

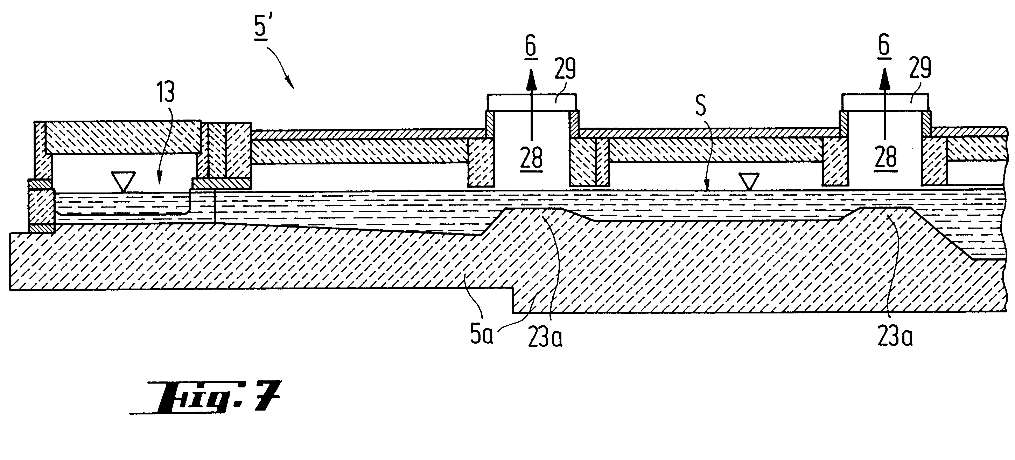

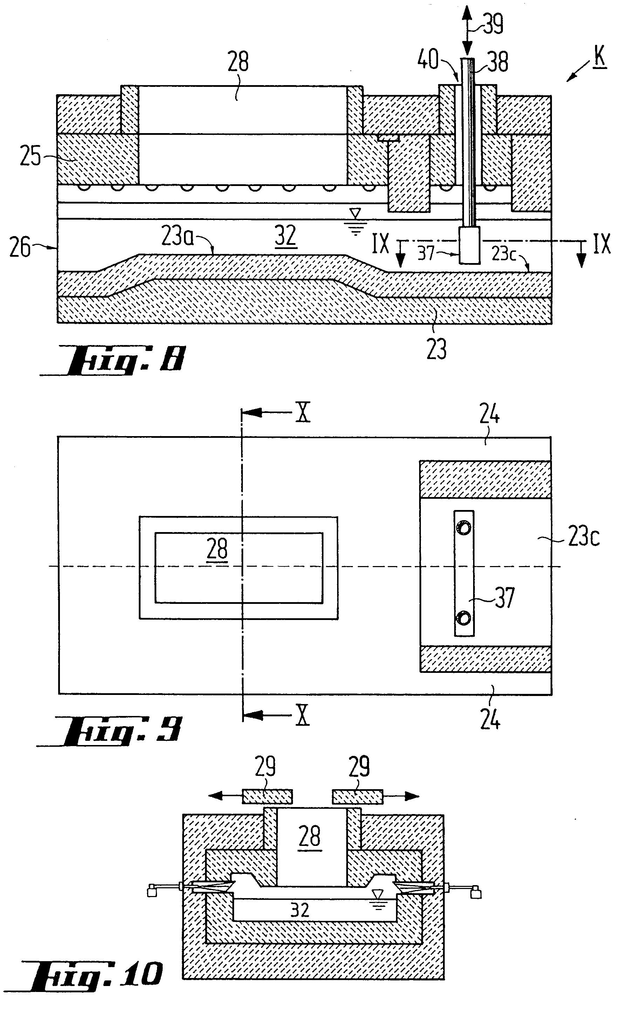

Das Ausführungsbeispiel nach den Figuren 8, 9 und 10 unterscheidet sich dadurch von den zuvor beschriebenen Ausführungsbeispielen, daß sich an die Erhebung 23a des Bodens 23 bei ansonsten gleichen geometrischen Verhältnissen wie in den Figuren 2, 3 und 4 ein weiterer Bereich anschließt, in dem sich oberhalb des unteren Bodenniveaus 23c ein Tauchkühler 37 befindet, der über zwei senkrechte Strömungskanäle 38 mit einem Kühlmedium beaufschlagbar ist. Die Strömungskanäle 38 können auch als konzentrische Rohrleitungen ausgeführt sein, was jedoch nicht näher dargestellt ist. Durch Anheben oder Absenken des Tauchkühlers 37 in Richtung des Doppelpfeils 39 läßt sich die Kühlwirkung im oberen und/oder unteren Bereich des Glasstromes 32 variieren. Durch eine periodische Querbewegung (quer zur Glasströmung) läßt sich die Intensität der Kühlung gleichfalls erhöhen. Auch kombinierte Bewegungen des Tauchkühlers sind möglich. Es ist ohne weiteres auch möglich, den Tauchkühler 37 als ausgesprochenes Rührelement auszubilden, um dadurch eine zusätzliche Homogenisierung der Temperatur im Glasstrom herbeizuführen. Die Strömungskanäle 38 sind durch eine Öffnung 40 in der Decke 25 nach außen geführt.

In dem Diagramm nach Figur 11 sind Werte dargestellt, die bei dem Ausführungsbeispiel nach Figur 7 teilweise gemessen, teilweise zu Vergleichszwecken errechnet wurden. Auf der Abszisse ist die Entfernung in Metern von der Mitte des Risers bis zum Eintritt in den Vorherd 13 angegeben, und auf der Ordinate sind die verschiedenen Temperaturverläufe in °C aufgetragen. Unter der Abszisse befindet sich - allerdings in spiegelsymmetrischer Vertauschung - das Höhenprofil bzw. die Topographie des Wannenbodens mit den beiden Erhebungen 23a. $T_1$ ist die Temperatur im Bereich des Risers, $T_2$ die Temperatur am Eintritt in den Vorherd 13. Die Kurve 41 zeigt einen Temperaturverlauf, wie er ohne jede zusätzliche Kühlmaßnahme eintreten würde, d.h. aufgrund der üblichen und unvermeidlichen Verluste durch die endliche Wirkung aller Isolationsmaßnahmen. Die Kurven 42 und 43 zeigen zwei Kurvenverläufe, die sich dann einstellen würden, wenn die Glasschmelze die beiden Kühlzonen im Bereich der Öffnungen 28 ohne das Vorhandensein der beiden Erhebungen 23a durchlaufen würden. Die untere Kurve 42 steht alsdann für die Oberflächentemperatur, und die obere Kurve 43 steht für die Bodentemperatur der Schmelze. Der große und zunehmend größer werdende Abstand zwischen den beiden Kurven 42 und 43 ist darauf zurückzuführen, daß der Bodenbereich der Schmelze deutlich weniger dem kühlenden Einfluß der Öffnungen 28 ausgesetzt ist, als die Oberfläche der Schmelze. Es ergibt sich aus den eingangs geschilderten Zusammenhängen, daß die Verhältnisse um so ungünstiger werden, je stärker die Einfärbung des Glases ist. Bei Farbgläsern würden sich beide Kurven 42 und 43 zusätzlich nach oben verschieben, d.h. auch eine durch Homogenisierung gebildete mittlere Temperatur würde deutlich höher liegen als die mit der erfindungsgemäßen Vorrichtung angestrebte Austrittstemperatur $T_2$. Es ergibt sich insbesondere aus dem großen Abstand der beiden Kurven 42 und 43 am Ende des in Figur 11 gezeigten Strömungsweges, daß man eine enorm lange Homogenisierungsstrecke benötigen würde und intensive Maßnahmen zur Homogenisierung ausführen müßte, um die Temperaturdifferenz deutlich zu verringern.

Die weiteren Kurven 44 und 45 zeigen die Verhältnisse beim Vorhandensein der beiden schwellenförmigen Erhebungen 23a in der Topographie-Darstellung unterhalb der Abszisse in Figur 11. Durch die geringe Badtiefe oberhalb der Erhebungen 23a nimmt der Bodenbereich der Schmelze sehr viel stärker am Energieaustausch mit der Umgebung teil, und er gibt insbesondere auch nicht in dem Maße wieder Energie an die Oberfläche der Schmelze ab. Dadurch und durch die Durchmischung der Schmelze in den Strömungsbereichen oberhalb der Erhebungen 23a wird die Temperaturdifferenz über die gesamte dargestellte Länge des Verteilerkanals drastisch verringert und auf den schraffiert dargestellten Bereich beschränkt. Die in der Mitte dieses Bereichs stark ausgezogen dargestellte Linie gibt die rechnerisch bestimmten Mittelwerte des Temperaturverlaufs wieder. Es ergibt sich gleichfalls aus Figur 11, daß durch die geringe Temperaturdifferenz am Ende der Behandlungsstrecke im Verteilerkanal eine wesentlich kürzere Homogenisierungsstrecke benötigt wird, um die gewünschte Annäherung der oberen und der unteren Grenztemperatur an den Mittelwert herbeizuführen.

Der Strömungsquerschnitt über der oder jeder Erhebung 23a, d.h. das Produkt aus Badtiefe T und Breite B ist durch den Durchsatz und die mittlere Strömungsgeschwindigkeit vorgegeben. Die Breite der oder jeder Öffnung 28, quer zur Strömungsrichtung gesehen, ist geringer als die Breite B des Strömungsquerschnitts, da die beiden Randbereiche des Glasstromes gegen eine unzulässige Abkühlung geschützt werden müssen, wozu eine in der Regel relativ schwache Randbeheizung, vorzugsweise durch Brenner durchgeführt wird.

Im Rahmen der vorgegebenen Strömungsparameter ist aber die Länge der oder jeder Kühlzone - in Strömungsrichtung gesehen - d.h. die Länge der oder jeder Öffnung 28 und die Länge der oder jeder schwellenförmigen Erhebung 23a festzulegen, deren Breite sich ohnehin über den gesamten Strömungsquerschnitt erstreckt, damit keine seitliche Umgehung erfolgen kann. Für die Bestimmung der Länge der Öffnungen 28 und der Erhebungen 23a vermittelt Figur 11 Grundlagen für die Bestimmung der Länge der Kühlzone oder Kühlzonen in Strömungsrichtung: Eintrittstemperatur $T_1$ und Austrittstemperatur $T_2$ sind durch die vorgeschaltete Schmelzwanne einerseits und durch die nachfolgenden Aggregate wie Speiser und Vorherde andererseits vorgegeben. Die geringfügigen Temperaturabsenkungen außerhalb der Kühlzonen liegen gleichfalls aufgrund bekannter Zusammenhänge fest. Es ist jedoch Figur 11 zu entnehmen, daß im Bereich der Erhebungen 23a und der Öffnungen 28 eine relativ sehr viel stärkere Temperaturabsenkung auf kürzerem Weg erfolgt, was an dem Steilabfall der Temperaturkurven erkennbar ist. Daraus ergibt sich wiederum die notwendige Länge der beschriebenen Kühlzonen, wobei in die Berechnung wiederum die Verweilzeit eingeht, die sich wiederum aus dem Durchsatz und der Strömungsgeschwindigkeit bestimmen läßt. Figur 7 zeigt diesbezüglich maßstäblich bewährte geometrische Auslegungsdaten eines solchen Systems.

Zusammenfassend läßt sich folgendes ausführen:

Durch die entsprechend geringe Tiefe des Glasstromes bei großer Breite erfolgt innerhalb einer relativ kurzen Kühlzone ein intensiver Abbau der mittleren Temperatur, was sich durch den steilen Temperaturverlauf im Bereich der Erhebungen 23a äußert. Dadurch steht bei gegebener Gesamtlänge der Behandlungsstrecke eine relativ große Länge für die jeweils nachfolgende(n) Homogenisierungszone(n) zur Verfügung, in der die mittlere Temperatur weitgehend unverändert bleibt. Sowohl der steile Temperaturabfall in den Kühlzonen als auch die gleichförmige mittlere Temperatur in den Homogenisierungszonen schließen nicht aus, daß die beiderseitigen Randzonen des breiten Glasstromes zusätzlich beheizt werden, wie dies für die Kühlzone anhand der Figuren 2 bis 4 (Brenneranordnung) dargestellt ist. Es ist lediglich dafür zu sorgen, daß durch den kombinierten Effekt von Dünnschichtkühlung, Rand- und ggf. auch Oberflächenbeheizung in Richtung auf eine möglichst homogene Temperaturverteilung eingewirkt wird. Hierfür steht aber ein verhältnismäßig sehr langer Strömungsweg in den Homogenisierungszonen zur Verfügung, während in den Kühlzonen die Voraussetzungen dafür geschaffen werden, daß der Glasstrom auch bereits mit nicht allzu großen Temperaturdifferenzen an den einzelnen Stellen des Strömungsquerschnitts in die Homogenisierungszonen eintritt. Durch den niedrigen Füllstand bei größerer Breite B des Strömungsquerschnitts wird zusätzlich erreicht, daß die Wärmeverluste über die Seitenwände 24 verringert werden. Auch hierdurch wird die Homogenisierung verbessert und außerdem eine Energieersparnis erzielt.

Aus dem Gesamtzusammenhang ergibt sich darüber hinaus, daß es außerordentlich wichtig ist, den intensivsten Teil der Kühlzone möglichst an den Anfang der Behandlungsstrecke zu legen, bei Verteilerkanälen oder Arbeitswannen also möglichst dicht hinter dem Durchlaß der Schmelzwanne.

Bei der Würdigung der Erfindung sind die hohen Durchsätze bzw. mittleren Strömungsgeschwindigkeiten und Temperaturdifferenzen besonders zu beachten. Zu hohen Belastungen führen bereits die in heutigen Arbeitswannen angewandten mittleren Strömungsgeschwindigkeiten von 4,5 bis 5,5 m/h. Bei einer erfindungsgemäß dimensionierten und betriebenen Arbeitswanne mit einer Breite von 1500 mm und einer Badtiefe von 150 mm, also einem Verhältnis $T/B = 0,1$ wurden mit sehr gutem Erfolg bei Durchsätzen von 100 und 150 Tonnen/Tag mittlere Strömungsgeschwindigkeiten von etwa 7 bzw. 11 m/h erreicht, ohne daß dadurch die Homogenität der Glasschmelze an der Entnahmestelle in Frage gestellt worden wäre.

**Patentansprüche**

1. Verfahren zum Konditionieren und Homogenisieren eines kontinuierlich fließenden Glasstromes (32) in einer Behandlungsstrecke (9, 10, 16), die sich von der Eintrittsseite (26) einer Arbeitswanne oder eines Verteilerkanals (5) bis zu mindestens einer Entnahmestelle (E) erstreckt und in der sich mindestens eine Kühlzone (K; 6, 7, 8; 17, 18, 19) befindet, an die sich mindestens eine Homogenisierungszone (11, 12; 20, 21, 22) für die Glastemperatur anschließt, wobei in der Arbeitswanne oder dem Verteilerkanal (5) die Temperatur von einer Eintrittstemperatur $T_1$ auf eine Austrittstemperatur $T_2$ abgesenkt wird, vorzugsweise zum Herstellen von Formglasteilen wie Hohlglasteilen und Preßglasteilen, **dadurch gekennzeichnet**, daß in der mindestens einen Kühlzone (K; 6, 7, 8) der Arbeitswanne oder des Verteilerkanals (5) mittels mindestens einer vom Boden aufragenden Erhebung (23a) ein Strömungsquerschnitt der Glasmasse mit einem Tiefen-/Breitenverhältnis T/B von maximal 0,6 eingestellt wird, wobei die maximale Tiefe $T_{max}$ 300 mm beträgt und daß in dem Glasstrom (32) in der Summe aller Kühlzonen der Arbeitswanne oder des Verteilerkanals (5) mindestens 50 % der Temperaturdifferenz zwischen $T_1$ und $T_2$ abgebaut werden.

2. Verfahren nach Anspruch 1, **dadurch gekennzeichnet**, daß in der oder jeder Kühlzone ein Strömungsquerschnitt der Glasmasse mit einem Tiefen-/Breitenverhältnis T/B von maximal 0,5 eingestellt wird.

3. Verfahren nach Anspruch 1, **dadurch gekennzeichnet**, daß in der oder jeder Kühlzone ein Strömungsquerschnitt der Glasmasse mit einem Tiefen-/Breitenverhältnis T/B von maximal 0,4 eingestellt wird.

4. Verfahren nach Anspruch 1, **dadurch gekennzeichnet**, daß in der oder jeder Kühlzone ein Strömungsquerschnitt der Glasmasse mit einem Tiefen-/Breitenverhältnis T/B von maximal 0,3 eingestellt wird.

5. Verfahren nach Anspruch 1, **dadurch gekennzeichnet**, daß in der oder jeder Kühlzone ein Strömungsquerschnitt der Glasmasse mit einem Tiefen-/Breitenverhältnis T/B von maximal 0,2 eingestellt wird.

6. Verfahren nach Anspruch 1, **dadurch gekennzeichnet**, daß die maximale Tiefe $T_{max}$ 250 mm beträgt.

7. Verfahren nach Anspruch 1, **dadurch gekennzeichnet**, daß die maximale Tiefe $T_{max}$ 200 mm beträgt.

8. Verfahren nach Anspruch 1, **dadurch gekennzeichnet**, daß in dem Glasstrom in der Summe aller Kühlzonen mindestens 60 % der Temperaturdifferenz zwischen $T_1$ und $T_2$ abgebaut werden.

9. Verfahren nach Anspruch 1, **dadurch gekennzeichnet**, daß in dem Glasstrom in der Summe aller Kühlzonen mindestens 70 % der Temperaturdifferenz zwischen $T_1$ und $T_2$ abgebaut werden.

10. Vorrichtung zur Durchführung des Verfahrens nach Anspruch 1 mit einer Behandlungsstrecke (9, 10, 16) zum kontinuierlichen Führen eines Glasstromes (32), die sich von der Eintrittsseite (26) einer Arbeitswanne oder eines Verteilerkanals (5) bis zu mindestens einer Entnahmestelle (E) erstreckt und in der sich mindestens eine Kühlzone (K; 6, 7, 8; 17, 18, 19) befindet, an die sich mindestens eine Homogenisierungszone (11, 12; 20, 21, 22) für die Glastemperatur anschließt, **dadurch gekennzeichnet**, daß in der mindestens einen Kühlzone (K; 6, 7, 8) der Arbeitswanne oder des Verteilerkanals (5) mittels mindestens einer vom Boden aufragenden Erhebung (23a) für den Glasstrom (32) ein Strömungsquerschnitt mit einem Tiefen-/Breitenverhältnis T/B von maximal 0,6 vorhanden ist, wobei die maximale Tiefe $T_{max}$ 300 mm beträgt.

11. Vorrichtung nach Anspruch 10, **dadurch gekennzeichnet**, daß in der oder jeder Kühlzone über der Erhebung (23a) ein Strömungsquerschnitt der Glasmasse mit einem Tiefen-/Breitenverhältnis T/B von maximal 0,5 vorhanden ist.

12. Vorrichtung nach Anspruch 10, **dadurch gekennzeichnet**, daß in der oder jeder Kühlzone über der Erhebung (23a) ein Strömungsquerschnitt der Glasmasse mit einem Tiefen-/Breitenverhältnis T/B von maximal 0,4 vorhanden ist.

**13.** Vorrichtung nach Anspruch 10, **dadurch gekennzeichnet**, daß in der oder jeder Kühlzone über der Erhebung (23a) ein Strömungsquerschnitt der Glasmasse mit einem Tiefen-/Breitenverhältnis T/B von maximal 0,3 vorhanden ist.

**14.** Vorrichtung nach Anspruch 10, **dadurch gekennzeichnet**, daß in der oder jeder Kühlzone über der Erhebung (23a) ein Strömungsquerschnitt der Glasmasse mit einem Tiefen-/Breitenverhältnis T/B von maximal 0,2 vorhanden ist.

**15.** Vorrichtung nach Anspruch 10, **dadurch gekennzeichnet**, daß die maximale Tiefe $T_{max}$ 250 mm beträgt.

**16.** Vorrichtung nach Anspruch 10, **dadurch gekennzeichnet**, daß die maximale Tiefe $T_{max}$ 200 mm beträgt.

**17.** Vorrichtung nach Anspruch 10, **dadurch gekennzeichnet**, daß in Strömungsrichtung hinter der Erhebung (23a) ein Tauchkühler (37) angeordnet ist.

**18.** Vorrichtung nach Anspruch 17, **dadurch gekennzeichnet**, daß der Tauchkühler (37) heb- und senkbar angeordnet ist.

**19.** Vorrichtung nach Anspruch 17, **dadurch gekennzeichnet**, daß der Tauchkühler (37) waagrecht quer zur Strömungsrichtung periodisch verschiebbar angeordnet ist.

**20.** Vorrichtung nach Anspruch 17, **dadurch gekennzeichnet**, daß der Tauchkühler (37) als Rührwerk ausgebildet ist.

## Claims

**1.** Process for conditioning and homogenising a continuously flowing glass flow (32) in a treatment section (9, 10, 16), which extends from the entry side (26) of a refiner or a distribution channel (5) as far as at least one removal point (E) and in which at least one cooling zone (K; 6, 7, 8; 17, 18, 19) is located, to which at least one homogenisation zone (11, 12; 20, 21, 22) for the glass temperature is connected, wherein in the refiner or distribution channel (5), the temperature is reduced from an inlet temperature $T_1$ to an outlet temperature $T_2$, preferably for the production of moulded glass parts such as hollow glass parts and pressed glass parts, characterised in that in the at least one cooling zone (K; 6, 7, 8) of the refiner or the distribution channel (5) a flow cross-section of the glass mass with a depth/width ratio T/B of 0.6 at maximum is set by means of at least one raised section (23a) projecting upwards from the base, wherein the

maximum depth $T_{max}$ amounts to 300 mm, and that at least 50% of the temperature difference between $T_1$ and $T_2$ is removed in the glass flow (32) in the sum of all the cooling zones of the refiner or distribution channel (5).

**2.** Process according to Claim 1, characterised in that a flow cross-section of the glass mass with a depth/width ratio T/B of 0.5 at maximum is set in the or in each cooling zone.

**3.** Process according to Claim 1, characterised in that a flow cross-section of the glass mass with a depth/width ratio T/B of 0.4 at maximum is set in the or in each cooling zone.

**4.** Process according to Claim 1, characterised in that a flow cross-section of the glass mass with a depth/width ratio T/B of 0.3 at maximum is set in the or in each cooling zone.

**5.** Process according to Claim 1, characterised in that a flow cross-section of the glass mass with a depth/width ratio T/B of 0.2 at maximum is set in the or in each cooling zone.

**6.** Process according to Claim 1, characterised in that the maximum depth $T_{max}$ amounts to 250 mm.

**7.** Process according to Claim 1, characterised in that the maximum depth $T_{max}$ amounts to 200 mm.

**8.** Process according to Claim 1, characterised in that at least 60% of the temperature difference between $T_1$ and $T_2$ is removed in the glass flow in the sum of all the cooling zones.

**9.** Process according to Claim 1, characterised in that at least 70% of the temperature difference between $T_1$ and $T_2$ is removed in the glass flow in the sum of all the cooling zones.

**10.** Apparatus for carrying out the process according to Claim 1 with a treatment section (9, 10, 16) for continuously directing a glass flow (32), which extends from the entry side (26) of a refiner or a distribution channel (5) as far as at least one removal point (E) and in which at least one cooling zone (K; 6, 7, 8; 17, 18, 19) is located, to which at least one homogenisation zone (11, 12; 20, 21, 22) for the glass temperature is connected, characterised in that in the at least one cooling zone (K; 6, 7, 8) of the refiner or the distribution channel (5) a flow cross-section with a depth/width ratio T/B of 0.6 at maximum is set for the glass flow (32) by means of at least one raised section (23a) projecting upwards from the base, wherein the maximum depth $T_{max}$ amounts to 300 mm.

11. Apparatus according to Claim 10, characterised in that a flow cross-section of the glass mass with a depth/width ratio T/B of 0.5 at maximum is provided in the or in each cooling zone via the raised section (23a).

12. Apparatus according to Claim 10, characterised in that a flow cross-section of the glass mass with a depth/width ratio T/B of 0.4 at maximum is provided in the or in each cooling zone via the raised section (23a).

13. Apparatus according to Claim 10, characterised in that a flow cross-section of the glass mass with a depth/width ratio T/B of 0.3 at maximum is provided in the or in each cooling zone via the raised section (23a).

14. Apparatus according to Claim 10, characterised in that a flow cross-section of the glass mass with a depth/width ratio T/B of 0.2 at maximum is provided in the or in each cooling zone via the raised section (23a).

15. Apparatus according to Claim 10, characterised in that the maximum depth $T_{max}$ amounts to 250 mm.

16. Apparatus according to Claim 10, characterised in that the maximum depth $T_{max}$ amounts to 200 mm.

17. Apparatus according to Claim 10, characterised in that an immersion cooler (37) is arranged behind the raised section (23a) in the direction of flow.

18. Apparatus according to Claim 17, characterised in that the immersion cooler (37) is arranged so that it may be raised and lowered.

19. Apparatus according to Claim 17, characterised in that the immersion cooler (37) is arranged so that it may be periodically displaced horizontally transversely to the direction of flow.

20. Apparatus according to Claim 17, characterised in that the immersion cooler (37) is constructed as a stirring device.

**Revendications**

1. Procédé pour le conditionnement et l'homogénéisation d'un courant de verre (32) s'écoulant en continu dans une ligne de traitement (9, 10, 16) qui s'étend depuis le côté de l'entrée (26) d'une cuve de travail ou d'un canal de répartition (5) jusqu'au moins une position de prélèvement (E) et dans laquelle se trouve au moins une zone de refroidissement (K; 6, 7, 8; 17, 18, 19) à laquelle se raccorde au moins une zone d'homogénéisation (11, 12; 20, 21, 22) pour la température du verre, procédé dans lequel, dans la cuve de travail ou dans le canal de répartition (5), la température s'abaisse, d'une température d'entrée $T_1$, à une température de sortie $T_2$, de préférence pour la fabrication d'objets en verre moulé comme des objets en verre creux et des objets en verre filé, caractérisé par le fait que, dans la zone de refroidissement, dont il y a au moins une, (K; 6, 7, 8), de la cuve de travail ou du canal de répartition (5), au moyen d'au moins une éminence (23a) qui s'élève depuis le fond, on donne à une section de l'écoulement de la masse de verre un rapport profondeur/largeur T/B de valeur maximale 0,6, la profondeur maximale $T_{max}$ valant 300 mm, et que, dans le courant de verre (32), au moins 50% de la différence de température entre $T_1$ et $T_2$ sont éliminés dans le total de toutes les zones de refroidissement de la cuve de travail ou du canal de répartition (5).

2. Procédé selon la revendication 1, caractérisé par le fait que dans la, ou dans chaque, zone de refroidissement, on donne à une section de l'écoulement de la masse de verre un rapport profondeur/largeur T/B d'une valeur maximale de 0,5.

3. Procédé selon la revendication 1, caractérisé par le fait que dans la, ou dans chaque, zone de refroidissement, on donne à une section de l'écoulement de la masse de verre un rapport profondeur/largeur T/B d'une valeur maximale de 0,4.

4. Procédé selon la revendication 1, caractérisé par le fait que dans la, ou dans chaque, zone de refroidissement, on donne à une section de l'écoulement de la masse de verre un rapport profondeur/largeur T/B d'une valeur maximale de 0,3.

5. Procédé selon la revendication 1, caractérisé par le fait que dans la, ou dans chaque, zone de refroidissement, on donne àune section de l'écoulement de la masse de verre est prescrite avec un rapport profondeur/largeur T/B d'une valeur maximale de 0,2.

6. Procédé selon la revendication 1, caractérisé par le fait que la profondeur maximale $T_{max}$ vaut 250 mm.

7. Procédé selon la revendication 1, caractérisé par le fait que la profondeur maximale $T_{max}$ vaut 200 mm.

8. Procédé selon la revendication 1, caractérisé par le fait que dans le courant de verre, au moins 60% de la différence de température entre $T_1$ et $T_2$ sont éliminés dans le total de toutes les zones de refroidissement.

9. Procédé selon la revendication 1, caractérisé par le fait que dans le courant de verre, au moins 70% de la différence de température entre $T_1$ et $T_2$ sont éliminés dans le total de toutes les zones de refroidissement.

10. Appareil pour la mise en oeuvre du procédé selon la revendication 1, comportant une ligne de traitement (9, 10, 16) pour le guidage continu d'un courant de verre (32), qui s'étend depuis le côté de l'entrée (26) d'une cuve de travail ou d'un canal de répartition (5) jusqu'au moins une position de prélèvement (E) et dans laquelle se trouve au moins une zone de refroidissement (K; 6, 7, 8; 17, 18, 19), à laquelle se raccorde au moins une zone d'homogénéisation (11, 12; 20, 21, 22), caractérisé par le fait que dans la zone de refroidissement ,dont il y a au moins une, (K; 6, 7, 8), de la cuve de travail ou du canal de répartition (5), au moyen d'au moins une éminence (23a) qui s'élève depuis le fond pour le courant de verre (32), il y a une section d'écoulement d'un rapport profondeur/largeur T/B de valeur maximale de 0,6, la profondeur maximale $T_{max}$ valant 300 mm.

11. Appareil selon la revendication 10, caractérisé par le fait que dans la, ou dans chaque, zone de refroidissement, il y a, au-dessus de l'éminence (23a), une section de l'écoulement de la masse de verre d'un rapport profondeur/largeur T/B d'une valeur maximale 0,5.

12. Appareil selon la revendication 10, caractérisé par le fait que dans la, ou dans chaque, zone de refroidissement, il y a, au-dessus de l'éminence (23a), une section de l'écoulement de la masse de verre d'un rapport profondeur/largeur T/B d'une valeur maximale 0,4.

13. Appareil selon la revendication 10, caractérisé par le fait que dans la, ou dans chaque, zone de refroidissement, il y a, au-dessus de l'éminence (23a), une section de l'écoulement de la masse de verre d'un rapport profondeur/largeur T/B d'une valeur maximale 0,3.

14. Appareil selon la revendication 10, caractérisé par le fait que dans la, ou dans chaque, zone de refroidissement, il y a, au-dessus de l'éminence (23a), une section de l'écoulement de la masse de verre d'un rapport profondeur/largeur T/B d'une valeur maximale 0,2.

15. Appareil selon la revendication 10, caractérisé par le fait que la profondeur maximale $T_{max}$ vaut 250 mm.

16. Appareil selon la revendication 10, caractérisé par le fait que la profondeur maximale $T_{max}$ vaut 200 mm.

17. Appareil selon la revendication 10, caractérisé par le fait que derrière l'éminence (23a), dans le sens de l'écoulement, est disposé un plongeur de refroidissement (37).

18. Appareil selon la revendication 17, caractérisé par le fait que le plongeur de refroidissement (37) est disposé avec un mouvement de monte et baisse.

19. Appareil selon la revendication 17, caractérisé par le fait que le plongeur de refroidissement (37) est disposé avec possibilité de coulisser périodiquement, horizontalement et transversalement à la direction de l'écoulement.

20. Appareil selon la revendication 17, caractérisé par le fait que le plongeur de refroidissement (37) est conçu sous forme d'un agitateur.

**Fig. 1**

**Fig: 2**

**Fig: 3**

**Fig: 4**

**Fig. 5**

**Fig. 11**

Fig. 6

Fig. 7

EP 0 631 991 B1

_Fig. 8_

_Fig. 9_

_Fig. 10_